# EUROPEAN PATENT APPLICATION

(11) **EP 4 333 109 A1**
(43) Date of publication of application: **06.03.2024**
(21) Application number: 23194343.2
(22) Date of filing: 30.08.2023
(51) Int. Cl.: H01M 4/133, H01M 4/134, H01M 4/1393, H01M 4/1395, H01M 4/36, H01M 4/38, H01M 4/583, H01M 4/62, H01M 10/052, H01M 4/02

(54) **ANODE AND SECONDARY BATTERY COMPRISING THE SAME**

(30) Priority: 02.09.2022 KR 20220111669
(71) Applicant: SK On Co., Ltd., Seoul 03161 (KR)
(72) Inventor: LEE, Sung Woo, 34124 Daejeon (KR); RYU, Sang Baek, 34124 Daejeon (KR); KIM, Ok Hee, 34124 Daejeon (KR); LEE, Ji A, 34124 Daejeon (KR)
(74) Representative: Prüfer & Partner mbB Patentanwälte · Rechtsanwälte

(57) **Abstract**

The present disclosure provides an anode including an anode current collector, a first anode active material layer formed on at least one side of the anode current collector and comprising a carbon-based material, and a second anode active material layer formed on the first anode active material layer and comprising a silicon-based material and single-walled carbon nanotubes, wherein a weight ratio of the silicon-based material and the single-walled carbon nanotubes is 30:1 to 150:1, and a secondary battery including the same.

## Description

### BACKGROUND

### 1. Technical Field

The present disclosure relates to an anode and a secondary battery including the same.

### 2. Related Art

With the development of the electronics, communications, and space industries, the demand for lithium secondary batteries as an energy power source is rapidly increasing. In particular, as the importance of global eco-friendly policies is emphasized, the electric vehicle market is growing rapidly, and research and development on lithium secondary batteries is actively carried out at home and abroad.

The lithium secondary battery includes a cathode, an anode, and a separator interposed therewith, and the cathode and anode are each provided with active materials into which lithium ions may be inserted and extracted.

The anode of lithium secondary batteries generally uses natural graphite and artificial graphite, but due to the low energy density of graphite, research has been conducted to improve energy density by developing new anode materials, and silicon materials have emerged as an alternative.

However, the silicon material has a problem in that cycle life characteristics of the secondary battery are deteriorated due to volume expansion during charging and discharging. A method of mixing single-walled carbon nanotubes was introduced to improve cycle life characteristics, but commercial application was problematic due to the high price of single-walled carbon nanotubes. In addition, even if the silicon material and the single-walled carbon nanotubes were mixed, the single-walled carbon nanotubes were not uniformly distributed on the surface of the silicon material, so there was a problem that the improvement of rapid charging performance was limited.

As such, a commercially applicable technology development improving the energy density compared to graphite anode materials, while improving rapid charging performance and cycle life characteristics, is required.

### SUMMARY

Embodiments provide an anode with improved rapid charging performance and cycle life characteristics, and excellent manufacturing economy and a secondary battery including the same.

In accordance with an aspect of the present disclosure, there is provided an anode including an anode current collector, a first anode active material layer formed on at least one side of the anode current collector and comprising a carbon-based material, and a second anode active material layer formed on the first anode active material layer and comprising a silicon-based material and single-walled carbon nanotubes, wherein a weight ratio of the silicon-based material and the single-walled carbon nanotubes is 30:1 to 150:1.

In an embodiment of the present disclosure, the second anode active material layer may further include a carbon-based material.

In an embodiment of the present disclosure, the carbon-based material may be one or more selected from a group consisting of artificial graphite, natural graphite, hard carbon, soft carbon, carbon black, acetylene black, ketjen black, super P, and graphene.

In an embodiment of the present disclosure, the silicon-based material may include one or more selected from a group consisting of SiOx (0 ≤ x<2), Si/C composite, and Si alloy.

In an embodiment of the present disclosure, the second anode active material layer may further include multi-walled carbon nanotubes.

In an embodiment of the present disclosure, an average diameter of the single-walled carbon nanotubes may be 0.1 nm to 8.0 nm.

In an embodiment of the present disclosure, an average diameter of the single-walled carbon nanotubes may be 1.5 nm to 5.0 nm.

In an embodiment of the present disclosure, an average length of the single-walled carbon nanotubes may be 3 µm to 20 µm.

In an embodiment of the present disclosure, an average length of the single-walled carbon nanotubes may be 5 µm to 20 µm.

In an embodiment of the present disclosure, a weight ratio of the silicon-based material and the single-walled carbon nanotubes may be 60:1 to 150:1.

In an embodiment of the present disclosure, a content of the silicon-based material may be 1 wt% to 20 wt% based on a total weight of the second anode active material layer.

In an embodiment of the present disclosure, a content of the single-walled carbon nanotubes may be greater than 0.01 wt% and less than or equal to 0.15 wt% based on a total weight of the first and second anode active material layers.

In an embodiment of the present disclosure, a loading ratio of the first anode material layer and the second anode active material layer may be 2:8 to 8:2.

In an embodiment of the present disclosure, a loading level of entirety of the first anode active material layer and the second anode active material layer may be 5 mg/cm2 to 15 mg/cm2.

In an embodiment of the present disclosure, the anode may further include a primer layer formed between the anode current collector and the first anode active material layer.

In an embodiment of the present disclosure, the primer layer may include a binder.

In an embodiment of the present disclosure, the binder may include styrene butadiene rubber.

In an embodiment of the present disclosure, the primer layer may further include a thickening agent.

In an embodiment of the present disclosure, the thickening agent may include one or more selected from a group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

In accordance with another aspect of the present disclosure, there is provided a secondary battery including the anode, a cathode, and a separator interposed between the anode and the cathode.

The anode according to the present disclosure and the secondary battery including the same include a silicon-based material and a single-walled carbon nanotube as the anode material, thereby having an effect of improving energy density and improving cycle life characteristics by alleviating a problem in which a conductive path is isolated due to volume expansion of the silicon-based material.

In addition, in the anode according to the present disclosure and the secondary battery including the same, since the silicon-based material and single-walled carbon nanotubes are concentrated on the surface of the anode, lithium-ion (Li-ion) reaction sites are increased on the surface of the anode close to the cathode, so that lithium-ions may be easily adsorbed on the anode. As a result, it is possible to remove overvoltage that may occur in the cathode and reduce Li-plating, thereby having an effect of improving rapid charging performance.

In addition, the anode according to the present disclosure and the secondary battery including the same may reduce the amount of single-walled carbon nanotubes used compared to the anode in which the silicon-based material is present non-biased in the anode active material layer, thereby having an effect of improving manufacturing economics through cost reduction.

In addition, in the anode according to the present disclosure and the secondary battery including the same, the silicon-based material and single-walled carbon nanotubes are concentrated on the surface of the anode, and by specifying the content ratio between the silicon-based material and the single-walled carbon nanotubes, there is an effect of improving rapid charging performance without deterioration in cycle life characteristics of the secondary battery.

### DETAILED DESCRIPTION

Hereinafter, an anode according to the present disclosure and a secondary battery including the same will be described.

### <Anode>

The anode according to the present disclosure includes an anode current collector, a first anode active material layer formed on at least one side of the anode current collector and comprising a carbon-based material, and a second anode active material layer formed on the first anode active material layer and comprising a silicon-based material and single-walled carbon nanotubes, wherein a weight ratio of the silicon-based material and the single-walled carbon nanotubes is 30:1 to 150:1.

The anode according to the present disclosure may include a structure provided with an active material including a silicon-based material and single-walled carbon nanotubes on the anode current collector as a separate layer. By having a silicon-based material and single-walled carbon nanotubes as a separate layer on the anode surface close to the cathode rather than a single anode active material layer on the anode current collector, Li-ion reaction sites are increased on the anode surface, so that Li-ion may be easily adsorbed. As a result, it is possible to remove overvoltage that may occur in the cathode and reduce Li-plating, thereby having an effect of improving rapid charging performance. In addition, compared to having silicon-based material and single-walled carbon nanotubes on the anode current collector as a single anode active material layer, the use of single-walled carbon nanotubes may be reduced, thereby having an effect of improving manufacturing economics through cost reduction.

The anode current collector is not particularly limited as long as it has conductivity without causing chemical change in the secondary battery, and for example, copper, stainless steel, aluminum, nickel, titanium, calcined carbon, copper or stainless steel surface treated with carbon, nickel, titanium, silver, etc., aluminum-cadmium alloy may be used. In addition, fine irregularities may be formed on the surface to enhance bonding strength of the anode active material, and may be used in various forms such as films, sheets, foils, nets, porous materials, foams, and nonwoven fabrics.

The first anode active material layer is formed on at least one side of the anode current collector and includes a carbon-based material. The carbon-based material may inlude one or more selected from the group consisting of artificial graphite, natural graphite, hard carbon, soft carbon, carbon black, acetylene black, ketjen black, super P, and graphene.

The first anode active material layer may further include a binder. The binder is preferably a binder with good adhesion with the anode current collector, for example, for example, one or more selected from the group consisting of polyvinylidene fluoride, carboxymethylcellulose, styrene butadiene rubber, polyimide, polyamideimide, polyvinyl alcohol, hydroxypropylcellulose, polyvinylchloride, carboxylated polyvinylchloride, polyvinyl fluoride, polymers containing ethylene oxide, polyvinylpyrrolidone, polyurethanes, polytetrafluoroethylene, polyethylene, polypropylene, acrylated styrene-butadiene rubber, and epoxy resins may be used.

The first anode active material layer may further include a conductive material. The conductive material is added to secure or improve conductivity, and it is preferable to have excellent electrical conductivity and conductivity without causing side reactions or chemical changes in the internal environment of the secondary battery. For example, one or more selected from the group consisting of carbon black, acetylene black, channel black, ketjen black, furnace black, lamp black, and summer black may be used.

The second anode active material layer is formed on the first anode active material layer and includes a silicon-based material. In addition, the second anode active material layer may further include a carbon-based material, and the type of carbon-based material may be the same or different from the carbon-based material included in the first anode active material layer.

The silicon-based material exhibits a higher capacity than the carbon-based material and may realize a high energy density per volume. Due to this, the excellent capacity characteristics and rapid charging performance of the secondary battery may be improved.

The silicon material may include one or more selected from the group consisting of SiOx (0 ≤ x<2), Si/C composite, and Si alloy. x corresponds to the number ratio of O to Si contained in SiOx (0 ≤x<2). The average particle diameter (D 50) of SiOx (0 ≤x<2) may be 4 µm to 9 µm, or 5 µm to 7 µm. When the above range is satisfied, the secondary battery life deterioration due to volume expansion of the silicon-based material may be prevented, and the side reaction of the surface of the silicon-based material may be suppressed. The specific surface area of SiOx (0 ≤x<2) may be 4m2/g to 9m2/g, or 5m2/g to 8m2/g. When the above range is satisfied, an optimal conductive network may be formed with single-walled carbon nanotubes used in the present disclosure. The Si/C composite may have a form in which a carbon material is coated on the surface of a SiOx (0 ≤x<2) particle or a form in which carbon is dispersed in an atomic state inside a SiOx (0 ≤x<2) particle, by firing in the state where carbon is bonded to SiOx (0 ≤x<2) particles. The Si-alloy may be in the form in which Si is alloyed with one or more metals selected from the group consisting of Zn, Al, Mn, Ti, Fe, and Sn. The content of the silicon-based material may be included from 1 wt% to 20 wt%, from 3 wt% to 15 wt%, or from 6 wt% to 15 wt% based on the total weight of the second anode active material layer. When the range is satisfied, excellent capacity characteristics and rapid charging performance may be improved, and the conductive network by single-walled carbon nanotubes may be sufficiently maintained.

The second anode active material layer includes single-walled carbon nanotubes. Single-walled carbon nanotubes form a conductive network between silicon-based materials, minimizing the problem of isolated conductive paths due to the expansion of the volume of silicon-based materials due to long-term use of secondary batteries. In addition, by including a silicon-based material in the second anode active material layer distinct from the first anode active material layer rather than a single anode active material layer, the amount of single-walled carbon nanotubes used may be reduced compared to the silicon-based material included in a single anode active material layer, and thus manufacturing economics may be improved.

The average diameter of single-walled carbon nanotubes may be 0.1 nm to 8.0 nm, 1.5 nm to 5.0 nm, or 1.5 nm to 3.0 nm. When the above range is satisfied, the high flexibility of single-walled carbon nanotubes may more effectively form a conductive network between silicon-based materials, so that the cycle life characteristics of the secondary battery may be further improved. The average diameter is a value obtained by measuring the diameters of 100 single-walled carbon nanotubes in the second anode active material layer through SEM and then calculating an average thereof. The diameters of a single-walled nanotubes may be defined as a distance between a center of the single-walled carbon nanotubes and a surface of the single-walled carbon nanotubes.

The average length of single-walled carbon nanotubes may be 3 µm to 20 µm, 4 µm to 20 µm, or 5 µm to 20 µm. When the above range is satisfied, a conductive network connecting the silicon-based materials may be maintained even with excessive volume changes of the silicon-based materials, so that the cycle life characteristics of the secondary battery may be further improved. The average length is a value obtained by measuring the lengths of 100 single-walled carbon nanotubes in the second anode active material layer through SEM and then calculating an average thereof.

The weight ratio of the silicon-based material and the single-walled carbon nanotubes in the second anode active material layer may be 30:1 to 150:1 or 60:1 to 150:1. When the above range is satisfied, a conductive network connecting the silicon-based materials may be maintained even in excessive volume changes of the silicon-based materials, so that a phenomenon in which the silicon-based materials are electrically isolated may be solved. As a result, the movement of electrons on the surface of the silicon-based material may occur more easily and uniformly, thereby improving the rapid charging performance without degrading the cycle life characteristics of the secondary battery.

The content of single-walled carbon nanotubes may be included greater than 0.01% and less than or equal to 0.15 wt%, 0.02 wt% to 0.10 wt%, or 0.02 wt% to 0.05 wt% based on the total weight of the first and second anode active material layers. When the above range is satisfied, it is possible to reduce the amount of single-walled carbon nanotubes used without deteriorating cycle life characteristics of secondary batteries, thereby having an effect of improving manufacturing economics through cost reduction.

The second anode active material layer may further include multi-walled carbon nanotubes. A multi-walled carbon nanotube refers to a carbon nanotube having a plurality of single-walled carbon nanotubes. Multi-walled carbon nanotubes are more economical than single-walled carbon nanotubes, and may be disposed on the surface of a silicon-based material together with single-walled carbon nanotubes, thereby contributing to forming a conductive network with adjacent silicon-based materials

The average diameter of multi-walled carbon nanotubes may be 5 nm to 200 nm, 5 nm to 100 nm, or 5 nm to 50 nm. When the above range is satisfied, it is easy to disperse in the second anode active material slurry, and a conductive network may be effectively formed between silicon-based materials. The average diameter is a value obtained by measuring the diameters of 100 multi-walled carbon nanotubes in the second anode active material layer through SEM and then calculating an average thereof.

The average length of the multi-walled carbon nanotubes may be 0.1 µm to 100 µm, 0.1 µm to 50 µm, or 0.1 µm to 3 µm. When the above range is satisfied, the conductive network formation may be maximized even with a small content in the second anode active material slurry. The average length is a value obtained by measuring the lengths of 100 multi-walled carbon nanotubes in the second anode active material layer through SEM and then calculating the average thereof.

The loading ratio of the first anode active material layer and the second anode active material layer may be 2:8 to 8:2. When the above range is satisfied, since the lithium ion movement path may be properly maintained, the problem of increasing ion resistance may be minimized, and rapid charging performance may be improved without deterioration in cycle life characteristics of the secondary battery. The loading level of the entire first and second anode active material layers may be 5 mg/cm2 to 15 mg/cm2, 5 mg/cm2 to 12 mg/cm2 or 6 mg/cm2 to 12 mg/cm2. When the above range is satisfied, the capacity of the secondary battery may be increased and at the same time the maldistribution phenomenon of the binder or conductive material may be suppressed. Loading may refer to the solid weight of each of the first and second anode active material slurries finally formed after the first and second anode active material slurries applied on the anode current collector are dried or the weight of each of the first and second anode active material layers. For example, after obtaining a specimen by circularly punching at least five points having a predetermined interval in the longitudinal direction of the anode, the weight of the first and second anode active material slurry solids or the first and second anode active material layers in the specimen may be measured.

The anode according to the present disclosure may further include a primer layer formed between the anode current collector and the first anode active material layer. The primer layer may improve the interfacial adhesion between the anode current collector and the first anode active material layer to improve the electrode extraction problem. In addition, the anode provided with a primer layer is advantageous in securing an electron transport path, and thus electron conductivity may be improved.

The primer layer may include a binder. The binder may improve the adhesion between the anode current collector and the first anode active material to improve the rapid charging performance of the secondary battery, and may include, for example, styrene butadiene rubber. The content of the binder may be 10 wt% to 40 wt%, 10 wt% to 35 wt%, or 10 wt% to 30 wt% based on the total weight of the primer layer. When the above range is satisfied, the resistance of the secondary battery is not increased, and the adhesion between the anode current collector and the first anode active material layer may be improved.

The primer layer may include a thickening agent. The thickening agent may enhance the cohesive force of the binder, thereby improving the problem of cracking on the anode surface. The thickening agent may include one or more selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum. The content of the thickening agent may be included 0.05 wt% to 3.00 wt%, 0.10 wt% to 2.50 wt%, or 0.10 wt% to 2.00 wt% based on the total weight of the primer layer. When the above range is satisfied, process defects such as pinhole generation of the anode and slip of the primer layer may be prevented. If necessary, the primer layer may include one or more conductive materials from the group consisting of natural graphite, artificial graphite, carbon black, acetylene black, ketjen black, channel black, furnace black, lamp black, summer black, carbon fiber, metal fiber, carbon fluoride, aluminum powder, nickel powder, zinc oxide, potassium titanate, titanium oxide and polyphenylene derivatives to improve conductivity.

The loading ratio of the primer layer and the first and second anode active material layers may be 1:50 to 1:200, 1:50 to 1:150, or 1:70 to 1:100. When the above range is satisfied, excessive resistance increase and swelling of the secondary battery may be prevented, and cycle life characteristics of the secondary battery may not be deteriorated.

The anode according to the present disclosure may be manufactured by a known method, for example, a wet-on-wet method may be used. Specifically, after the primer composition is applied on the anode current collector, the first and second anode active material layers may be formed by applying the first anode active material and the second anode active material, respectively, without drying the primer composition. The primer layer, the first and second anode active material layers may be formed by a wet-on-wet method by a slot-die coater, a roll-coater, a knife coater, an extruded coater, or a Gravure-coater.

### <Secondary Battery>

The secondary battery according to the present disclosure includes the above-described anode, cathode, and a separator interposed between the anode and the cathode.

The secondary battery includes an anode, and as the anode, the anode current collector, the primer layer, the first anode active material layer, the second anode active material layer, and the like described in relation to the above described anode may be used in the same manner.

In addition to the anode of the present disclosure, the secondary battery includes a cathode and a separator. The cathode may include an cathode current collector and an active material layer disposed on the cathode current collector. The active material layer may include an active material. For example, the cathode active material layer may include a cathode active material, and the cathode active material may be a material in which lithium ions may be inserted and extracted.

The cathode active material may be lithium metal oxide. For example, the cathode active material may be one of lithium manganese-based oxide, lithium nickel-based oxide, lithium cobalt-based oxide, lithium nickel-manganese-based oxide, lithium nickel-cobalt aluminum-based oxide, lithium iron phosphate-based compound, lithium manganese phosphate-based compound, lithium cobalt phosphate-based compound, and lithium vanadium phosphate-based compound, and is not necessarily limited to a specific example.

The separator may be interposed between the anode and the cathode. The separator is configured to prevent electrical short circuits between the anode and the cathode, and to generate the flow of ions. The separator may include a porous polymer film or a porous nonwoven fabric. Here, the porous polymer film may be composed of a single layer or multiple layers, including polyolefin-based polymers such as ethylene polymers, propylene polymers, ethylene/butene copolymers, ethylene/hexene copolymers, and ethylene/methacrylate copolymers. The porous nonwoven fabric may include glass fibers with a high melting point, polyethylene terephthalate fibers. However, it is not limited thereto, and according to an embodiment, the separator may be a ceramic coated separator including ceramic.

The anode, cathode and separator may be fabricated into an electrode assembly by winding, lamination, folding, or zigzag stacking processes. In addition, the electrode assembly may be provided with an electrolyte and manufactured into a secondary battery according to the present disclosure. The secondary battery may be any one of a cylindrical shape using a can, a prismatic shape, a pouch shape, and a coin shape, but is not limited thereto.

The electrolyte may be a non-aqueous electrolyte. The electrolyte may include a lithium salt and an organic solvent. The organic solvent may include at least any one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

Hereinafter, the present disclosure will be described in more detail based on examples and comparative examples. However, the following examples and comparative examples are only examples for explaining the present disclosure in more detail, and the present disclosure is not limited by the following examples and comparative examples.

### Examples

### Example 1

### <Primer preparation>

The primer slurry was prepared by mixing carboxymethyl cellulose and styrene butadiene rubber were at 1:99 by weight.

### <First anode active material preparation>

The first anode active material slurry was prepared by mixing graphite-based anode active material, acetylene black, carboxymethyl cellulose, and styrene butadiene rubber at 96:2: 1: 1 by weight.

### <Second anode active material preparation>

The second anode active material slurry was prepared by mixing graphite-based anode active material, SiO, carboxymethyl cellulose, styrene butadiene rubber, single-walled carbon nanotubes (average diameter 1.6 nm, average length 5.0 µm), and multi-walled carbon nanotubes at 92:6: 1:0.5:0.1:0.4 by weight.

### <Anode preparation>

The prepared primer slurry was applied to the copper thin film, and the first anode active material was applied on the primer slurry, and the second anode active material was applied on the first anode active material. Thereafter, by drying for 1 hour under vacuum at 130°C, an anode provided with a primer layer, a first anode active material layer, and a second anode active material layer was prepared. The loading ratio of the prepared first anode active material layer and the second anode active material layer was 5:5, and the weight ratio of the silicon-based material and the single-walled carbon nanotubes in the second anode active material layer was 60:1.

### <Cathode preparation>

A slurry was prepared by mixing, as an active material, Li[Ni0.88Co0.10-Mn0.02]O2, carbon black, and polyvinylidene fluoride (PVdF) at 96:3: 1 by weight. The slurry was uniformly applied to aluminum foil and vacuum dried to prepare a cathode.

### <Secondary battery preparation>

The anode and the cathode were laminated by notching to a predetermined size, and an electrode cell was formed with a PE separator interposed between the anode and the cathode, and then tab portions of the anode and the cathode were welded, respectively. The welded anode/separator/cathode assembly was placed in a pouch and sealed on three sides except for the electrolyte injection part.

After injecting the electrolyte through the electrolyte injection part and sealing the remaining sides, it was impregnated for 12 hours or more. As the electrolyte, a solution obtained by dissolving 1M LiPF6 in a mixed solvent including EC and EMC was used.

Thereafter, pre-charging was performed for 36 minutes with a current corresponding to 0.25 C. Degasing was performed after 1 hour, and after aging for 24 hours or more, chemical charging and discharging was performed (charging condition CC-CV 0.2C 4.2V 0.05C CUT-OFF, discharging condition CC 0.2C 2.5V CUTOFF). Thereafter, a secondary battery was prepared by performing standard charging and discharging (charging condition CC-CV 0.33C 4.2V 0.05C CUT-OFF, discharging condition CC 0.33C 2.5V CUT-OFF).

### Example 2

A secondary battery was prepared by the same process as in Example 1, except that the loading ratio of the first anode active material layer and the second anode active material layer is 6:4 instead of 5:5, and the weight ratio of the silicon-based material and the single-walled carbon nanotubes in the second anode active material layer is 75:1 instead of 60:1.

### Example 3

A secondary battery was prepared by the same process as in Example 1, except that the loading ratio of the first anode active material layer and the second anode active material layer is 7:3 instead of 5:5, and the weight ratio of the silicon-based material and the single-walled carbon nanotubes in the second anode active material layer is 100:1 instead of 60:1.

### Example 4

The loading ratio of the first cathode active material layer and the second cathode active material layer is 8:2 instead of 5:5, and the weight ratio of the silicon-based material and the single-walled carbon nanotubes in the second cathode active material layer is 150:1 instead of 60:1.

### Example 5

A secondary battery was prepared by the same process as in Example 1, except that the weight ratio of single-walled carbon nanotubes (average diameter 1.6 nm, average length 5.0 µm) and multi-walled carbon nanotubes is 0.2:0.3 instead of 0.1:0.4, and the weight ratio of the silicon-based material and the single-walled carbon nanotubes in the second anode active material layer is 30:1 instead of 60:1.

### Example 6

A secondary battery was prepared by the same process as in Example 1, except that the primer layer is not formed.

### Example 7

A secondary battery was prepared by the same process as in Example 1, except that single-walled carbon nanotubes (average diameter 10 nm, average length 2.0 µm) are used instead of single-walled carbon nanotubes (average diameter 1.6 nm, average length 5.0 µm).

### Comparative Example 1

An anode active material is prepared by mixing graphite-based anode active material, SiO, carboxymethyl cellulose, styrene butadiene rubber, single-walled carbon nanotubes (average diameter 1.6 nm, average length 5.0 µm) and multi-walled carbon nanotubes in a weight ratio of 95:3:1:0.5:0.1:0.4, and an anode provided with a single anode active material layer was prepared by applying the prepared anode active material on the primer slurry. The weight ratio of the silicon-based material and single-walled carbon nanotubes in the anode active material layer was 30:1.

### Comparative Example 2

A secondary battery was prepared by the same process as in Example 1, except that the loading ratio of the first anode active material layer and the second anode active material layer is 9:1 instead of 5:5, and the weight ratio of the silicon-based material and the single-walled carbon nanotubes in the second anode active material layer is 300:1 instead of 60:1.

### Comparative Example 3

A secondary battery was prepared by the same process as in Comparative Example 2, except that the primer layer is not formed in Comparative Example 2.

### Comparative Example 4

A secondary battery was prepared by the same process as in Example 1, except that the weight ratio of single-walled carbon nanotubes (average diameter 1.6 nm, average length 5.0 µm) and multi-walled carbon nanotubes is 0.24:0.26 instead of 0.1:0.4, and the weight ratio of the silicon-based material and the single-walled carbon nanotubes in the second anode active material layer is 25:1 instead of 60:1.

### Comparative Example 5

A secondary battery was prepared by the same process as in Example 1, except that the weight ratio of single-walled carbon nanotubes (average diameter 1.6 nm, average length 5.0 µm) and multi-walled carbon nanotubes is 0.3:0.2 instead of 0.1:0.4, and the weight ratio of the silicon-based material and the single-walled carbon nanotubes in the second anode active material layer is 20:1 instead of 60:1.

Details of the anode prepared in Examples 1 to 7 and Comparative Examples 1 to 5 are shown in Table 1 below.

### Experimental Example

### Experimental Example 1 - Rapid charging performance evaluation

For the secondary batteries prepared in Examples 1 to 7 and Comparative Examples 1 to 5, the charging time was measured from SOC 8% to SOC 80% under SOC 80% cut-off charging conditions at maximum 2C current under room temperature conditions, and the results are shown in Table 1 below.

### Experimental Example 2 - Cycle life characteristics evaluation

For the secondary batteries prepared in Examples 1 to 7 and Comparative Examples 1 to 5, the cycle life characteristics were evaluated by proceeding with 400 cycles under the following conditions, and the results were calculated on a relative scale and shown in Table 1 below.
1) Charging: CC-CV 4.2V, charge to C/3 rate SOC 100%
2) Discharge: discharge to SOC 0% with C/3 rate 2.5V cut-off
3) Temperature: 45°C

**TABLE 1**

| | | Example | | | | | | | Comparative Example | | | | |
|---|---|---|---|---|---|---|---|---|---|---|---|---|---|
| | | 1 | 2 | 3 | 4 | 5 | 6 | 7 | 1 | 2 | 3 | 4 | 5 |
| Anod e | Whether a primer layer is included | Inclu ded | Inclu ded | Includ ed | Includ ed | Inclu ded | Not include d | Inclu ded | Includ ed | Includ ed | Not include d | Inclu ded | Inclu ded |
| | Whether first and second anode active material layers are included | Inclu ded | Inclu ded | Includ ed | Includ ed | Inclu ded | Includ ed | Inclu ded | Not includ ed | Includ ed | Includ ed | Inclu ded | Inclu ded |
| | SiO: singl e-walled carbon nanotube s weight ratio | 60:1 | 75:1 | 100:1 | 150:1 | 30:1 | 60:1 | 60:1 | 30: 1 | 300:1 | 300:1 | 25:1 | 20:1 |
| | Primer layer:first and second anode active material layer loading ratio | 1:84 | 1:84 | 1:84 | 1:84 | 1:85 | - | 1:83 | 1:92¹⁾ | 1:85 | - | 1:85 | 1:86 |
| | First anode active material layer: sec ond anode active | 5:5 | 6:4 | 7:3 | 8:2 | 5:5 | 5:5 | 5:5 | - | 9:1 | 9:1 | 5:5 | 5:5 |
| | material layer loading ratio | | | | | | | | | | | | |
| Rapid charging time | | 30 min | 29 min | 28 min | 27 min | 30 min | 30 min | 30 min | 33 min 10 sec | 26 min | 26 min 10 sec | 30 min | 30 min |
| 400 cycle lifetime | | 85.0 % | 84.8 % | 84.9% | 84.8% | 85.2 % | 84.6% | 84.3 % | 85.0% | 75.2% | 75.0% | 85.1 % | 85.2 % |
| 1) refers to the loading ratio between primer layer: single anode active material layer | | | | | | | | | | | | | |

According to Table 1 above, in Examples 1 to 7 in which silicon-based material SiO and single-walled carbon nanotubes are concentrated on the surface of the anode, and the weight ratio of the silicon-based material and single-walled carbon nanotubes satisfy 30:1 to 150:1, compared to Comparative Examples 1 to 3, it was confirmed that rapid charging performance was improved without deterioration in cycle life characteristics.

Specifically, Example 1 is an electrode having a structure in which an active material including a silicon-based material and single-walled carbon nanotubes is on the top and a carbon-based active material is on the bottom, and Comparative Example 1 is different in that it has a single anode active material layer. Due to this difference, the total content of the silicon-based material used in Example 1 and Comparative Example 1 is the same, but since the silicon-based material of Example 1 is intensively distributed on the surface of the anode compared to the silicon-based material of Comparative Example 1, Li-ion reaction sites are increased on the surface of the anode, so that Li-ions may be easily adsorbed. As a result, it was possible to remove the overvoltage that may be generated at the cathode and reduce Li-plating, resulting in improved rapid charging performance.

In addition, the total content of the silicon-based material used in Example 4 and Comparative Example 2 is the same, whereas Comparative Example 2 is different in that the weight ratio of the silicon-based material and the single-walled carbon nanotubes in the second anode active material layer exceeds 150:1. Due to this difference, Comparative Example 2 has a relatively reduced content of single-walled carbon nanotubes in the second anode active material layer compared to Example 4, and it was confirmed that cycle life characteristics were deteriorated due to a problem of isolation of a conductive path due to volume expansion of the silicon-based material.

In addition, Example 5 and Comparative Examples 4 and 5 have the same content of the silicon-based material in the second anode active material layer, so there is no significant difference in rapid charging performance, whereas Comparative Examples 4 and 5 are different in that the weight ratio of single-walled carbon nanotubes is less than 30:1. Due to the high price of single-walled carbon nanotubes, commercial application may be determined by the difference in content. In Comparative Examples 4 and 5 compared to Example 5, the content ratio of single-walled carbon nanotubes was increased, but it was confirmed that there was no significant difference in improving cycle life characteristics. Therefore, the difference in rapid charging performance and cycle life characteristics between the case where the weight ratio of the silicon-based material and the single-walled carbon nanotubes in the second anode active material layer is 30:1 and less than 30:1 could not be confirmed, and only the manufacturing economics deterioration problem could be confirmed.

In addition, in Example 1 and Example 7, there is a difference in that the types of single-walled carbon nanotubes are different. Due to this difference, the single-walled carbon nanotubes of Example 1 more effectively secured a conductive path during volume expansion of the silicon-based material compared to the single-walled carbon nanotubes of Example 7, thereby confirming that cycle life characteristics were partially improved.

While the present disclosure has been shown and described with reference to certain exemplary embodiments thereof, it will be understood by those skilled in the art that various changes in form and details may be made therein without departing from the scope of the present disclosure as defined by the appended claims and their equivalents. Therefore, the scope of the present disclosure should not be limited to the above-described exemplary embodiments but should be determined by not only the appended claims but also the equivalents thereof.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

Meanwhile, the exemplary embodiments of the present disclosure have been described in the drawings and specification. Although specific terminologies are used here, those are only to explain the embodiments of the present disclosure. Therefore, the present disclosure is not restricted to the above-described embodiments and many variations are possible within the scope of the present disclosure. It should be apparent to those skilled in the art that various modifications can be made on the basis of the technological scope of the present disclosure in addition to the embodiments disclosed herein.

## Claims

1. An anode comprising:
an anode current collector;
a first anode active material layer formed on at least one side of the anode current collector and comprising a carbon-based material; and
a second anode active material layer formed on the first anode active material layer and comprising a silicon-based material and single-walled carbon nanotubes,
wherein a weight ratio of the silicon-based material and the single-walled carbon nanotubes is 30:1 to 150:1.

2. The anode of claim 1, wherein the second anode active material layer further comprises a carbon-based material.

3. The anode of claim 1 or 2, wherein the carbon-based material is one or more selected from a group consisting of artificial graphite, natural graphite, hard carbon, soft carbon, carbon black, acetylene black, ketjen black, super P, and graphene, and/or
wherein the silicon-based material comprises one or more selected from a group consisting of SiOx (0≤x<2), Si/C composite, and Si alloy.

4. The anode of any of the preceding claims, wherein the second anode active material layer further comprises multi-walled carbon nanotubes.

5. The anode of any of the preceding claims, wherein an average diameter of the single-walled carbon nanotubes is 0.1 nm to 8.0 nm, preferably 1.5 nm to 5.0 nm.

6. The anode of any of the preceding claims, wherein an average length of the single-walled carbon nanotubes is 3 µm to 20 µm, preferably 5 µm to 20 µm.

7. The anode of any of the preceding claims, wherein a weight ratio of the silicon-based material and the single-walled carbon nanotubes is 60:1 to 150:1.

8. The anode of any of the preceding claims, wherein a content of the silicon-based material is 1 wt% to 20 wt% based on a total weight of the second anode active material layer.

9. The anode of any of the preceding claims, wherein a content of the single-walled carbon nanotubes is greater than 0.01 wt% and less than or equal to 0.15 wt% based on a total weight of the first and second anode active material layers.

10. The anode of claim any of the preceding claims, wherein a loading ratio of the first anode material layer and the second anode active material layer is 2:8 to 8:2.

11. The anode of claim any of the preceding claims, wherein a loading level of entirety of the first anode active material layer and the second anode active material layer is 5 mg/cm² to 15 mg/cm².

12. The anode of claim any of the preceding claims, further comprising a primer layer formed between the anode current collector and the first anode active material layer.

13. The anode of claim 12, wherein the primer layer comprises a binder and/or thickening agent.

14. The anode of claim 13, wherein the binder comprises styrene butadiene rubber, and/or wherein the thickening agent comprises one or more selected from a group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

15. A secondary battery comprising:
the anode of anyone of claims 1 to 14;
a cathode; and
a separator interposed between the anode and the cathode.
